Europäisches Patentamt

European Patent Office

Office européen des brevets

(19)

(11) EP 0 845 798 A1

(12) EUROPEAN PATENT APPLICATION

(43) Date of publication:
03.06.1998 Bulletin 1998/23

(51) Int Cl.⁶: H01J 29/76

(21) Application number: 97402828.4

(22) Date of filing: 25.11.1997

(84) Designated Contracting States:
AT BE CH DE DK ES FI FR GB GR IE IT LI LU MC
NL PT SE
Designated Extension States:
AL LT LV MK RO SI

(30) Priority: 27.11.1996 JP 316397/96

(71) Applicant: LG ELECTRONICS INC.
Seoul (KR)

(72) Inventors:
• Arima, Kenji, c/o LG ELECTRONICS Inc.
  Daitoh-Ku, Tokyo 110 (JP)
• Takemura, Takeo, c/o LG ELECTRONICS Inc.
  Daitoh-Ku, Tokyo 110 (JP)

(74) Representative: Fréchède, Michel
Cabinet Plasseraud
84, rue d'Amsterdam
F-75440 Paris Cédex 09 (FR)

(54) Two-winding horizontal deflection coil structure for deflection yoke

(57)     A horizontal deflection coil structure for a horizontal deflection yoke includes a plurality of horizontal deflection coils being connectable in series or parallel with each other so as to obtain required inductances, with respective end portions of the horizontal deflection coils being connected to in order to selectively connect the horizontal deflection coils in series or parallel with each other. The deflection coil structure for a horizontal yoke is applicable to either a TV receiver display or a personal computer display monitor.

**Description**

BACKGROUND OF THE INVENTION

1. Field of the Invention

The present invention relates to a deflection yoke structure, and more particularly to an improved horizontal deflection coil structure for a deflection yoke which is applicable to both a television set and a computer monitor.

2. Description of the Prior Art

In general, a deflection yoke is comprised of a horizontal deflection coil and a vertical deflection coil, and it may vary in form between a saddle-saddle type and a saddle-toroidal type, depending on its disposition.

Recently, there has been developed a display system that serves as both a TV display and a computer display monitor, and accordingly a simple switching operation easily enables a user to convert such a display system into a TV screen or into a computer monitor.

A monitor applicable to a computer displays images on its screen in accordance with a VGA (Variable Graphics Array) standard (a display resolution for graphics introduced by IBM company). A multi-synch operation enables an appropriate picture display by automatically determining a display resolution including scanning frequencies for images from a personal computer.

Meanwhile, a general television receiver utilizes a frequency of 15.75KHz for a horizontal driving signal, whereas there is required a frequency of 31KHz for the horizontal driving signal in a personal computer display monitor which adopts the VGA standard. Therefore, in order to make a single display system usable as both a television and computer display, an inductance of a horizontal deflection coil should adjust to either of the required frequencies, for thereby being applicable to both television and computer display use.

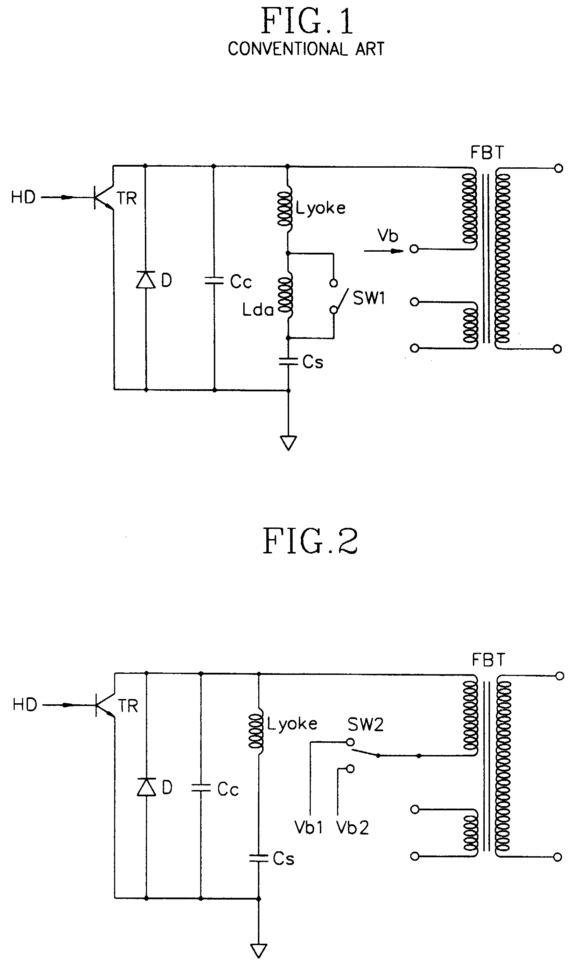

Figures 1 and 2 are exemplary schematic circuit diagrams of conventional multi-synch horizontal driving circuits incorporating a coil structure for a deflection yoke, wherein, reference legend HD denotes a horizontal driving signal, D denotes a damper diode, Cc denotes a resonance condenser, Cs denotes a series condenser, and FBT denotes a fly-back transformer. Reference legends Vb, Vb1 and V2 respectively denote a primary supply voltage, Lyoke denotes an inductance for a horizontal deflection coil, and Lda denotes an inductance for a dummy coil.

As shown in Fig. 1, a switch SW1 is connected in parallel with dummy coil Lda. The inductance of the horizontal deflection coil Lyoke is tuned to a predetermined frequency, and dummy coil Lda is added thereto when there is applied a frequency other than the predetermined frequency. That is, when applied to a TV receiver which requires a lower frequency, the inductance should be increased, so that the switch SW1 is turned off to place dummy coil Lda in series in order to increase the inductance by adding Lda to Lyoke (Lda + Lyoke). For use as a display monitor for a personal computer which requires a higher frequency, the inductance should be decreased, so that the switch SW1 is turned on to bypass dummy coil Lda so as to select only the inductance Lyoke.

However, according to the method used in the circuit of Fig. 1, the insertion of dummy coil Lda into the circuit may cause a power loss that may affect the deflection that occurs in accordance therewith.

Also, according to the method used in Fig. 2, the primary supply voltage Vb that is to be applied to the FBT is selectable in accordance with the desired scan frequency. That is, the dummy coil used in the circuit of Fig. 1 is not employed in the circuit of Fig. 2, and the switch SW2 is substituted therefor, whereby the thusly obtained voltages Vb1, Vb2 realize convertibility between television and personal computer in display.

The current that flows through the primary side of the FBT is controlled by the voltages Vb1, Vb2, thereby enabling the compatibility between television and personal computer. As described above, when used as a TV receiver, the voltage should become lower, whereas when used as a personal computer monitor, the voltage should be raised so as to increase the current, for thereby obtaining an effect equivalent to the inductance switching.

As a result, because the primary supply voltages Vb1, Vb2 are required to adjust the horizontal scanning frequency between 15.75KHz and 31KHz, respectively, the method employed in the circuit of Fig. 2 encounters the following disadvantages: 1) the voltage obtained from the FBT becomes variable depending on the fluctuation of the voltage Vb, so that the voltage Vb should be provided by an external apparatus, thereby increasing the production cost and restricting the FBT from being employed in a second coil; and 2) when a chopper supply circuit is employed to supply the primary supply voltage Vb, noise from the supply circuit may affect other circuits.

Consequently, in the conventional circuits as shown in Figs. 1 and 2, there occurs a power loss together with a complicated circuit, thereby requiring an exclusive power supply circuit for the deflection circuit.

## SUMMARY OF THE INVENTION

Accordingly, it is an object of the present invention to provide a horizontal deflection coil structure for a deflection yoke which is convertible between a TV receiver display and personal computer display.

To achieve the above-described object, there is provided a horizontal deflection coil structure for a deflection yoke according to the present invention which includes a plurality of horizontal deflection coils being connectable in series or parallel with each other so as to obtain required inductances.

The deflection coil structure includes respective end portions of the horizontal deflection coils being connected to respective relay contacts in order to connect the ends of the horizontal deflection coils in series or parallel with each other.

The relay contacts in the deflection coil structure are automatically connected or disconnected in correspondence with an input signal of a television set or a personal computer display.

Further, a horizontal deflection coil structure for a deflection yoke according to the present invention includes an even number of or a plurality of horizontal deflection coils assembled to the deflection yoke, a desired number of coils selected from the horizontal deflection coils being divided into a plurality set thereof and being connected to corresponding terminals of the yoke.

## BRIEF DESCRIPTION OF THE DRAWINGS

The present invention will become better understood with reference to the accompanying drawings which are given only by way of illustration and thus are not limitative of the present invention, wherein:

Figure 1 is a schematic circuit diagram illustrating an example of a horizontal deflection driving circuit incorporating a coil structure according to the conventional art;

Figure 2 is a schematic circuit diagram illustrating another example of a horizontal deflection driving circuit incorporating a coil structure according to the conventional art;

Figure 3A is a schematic composition view illustrating part of a horizontal deflection coil structure according to the present invention;

Figure 3B is a schematic diagram showing the connection of the horizontal deflection coil structure in Fig. 3A; and

Figure 4 is a schematic circuit diagram illustrating a horizontal deflection driving circuit employing the horizontal deflection coil structure according to the present invention.

## DETAILED DESCRIPTION OF THE INVENTION

With reference to the accompanying drawings, the horizontal deflection coil structure for a deflection yoke according to the present invention will now be described.

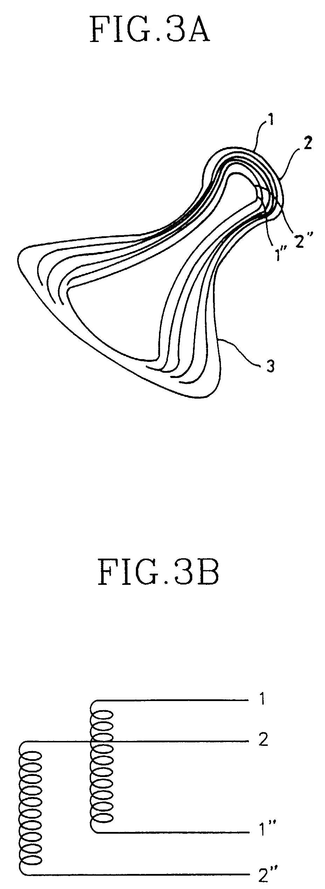

Figure 3A is a schematic view of a side portion of a horizontal deflection coil according to the present invention, and Figure 3B is a connection view of the horizontal deflection coil in Fig. 3A. As shown therein, the example indicates a dual-wound coiling, wherein a coil conduction checkup is carried out after winding, so that respective end portions 1, 2, 1", 2" are connected to corresponding terminals of a terminal plate in a deflection yoke plate (not shown).

Here, the relation between 1) a series inductance Ls between terminals $1 \sim 2"$ when the coils L1 and L2 are serially connected by linking the terminals 1" and 2, and 2) a parallel inductance Lp between the terminals $1 \sim 1"$ ($2 \sim 2"$) when the coils L1, L2 are connected in parallel by linking the terminals 1" and 2", will be:

$$Ls = 2 \times Lp$$

That is, in the two-winding coil, the inductance for a serial connection is twice that for a parallel connection.

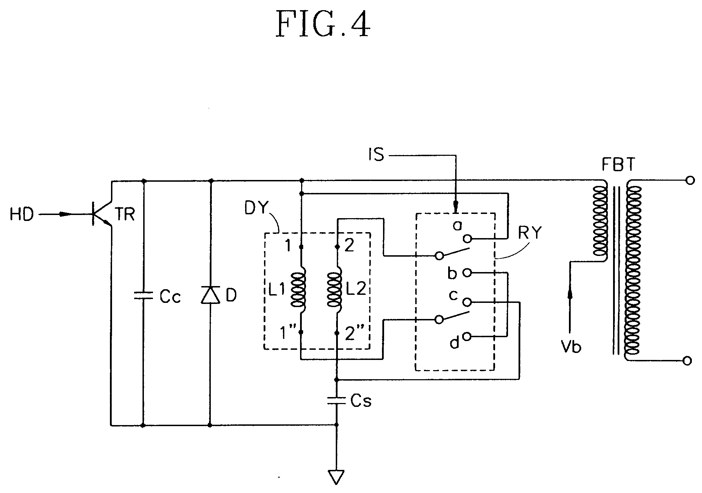

Figure 4 is a schematic circuit diagram of a horizontal deflection driving circuit incorporating the horizontal deflection coil for a deflection yoke according to the present invention. Therein, reference legend HD denotes a horizontal driving signal, TR denotes a horizontal driving transistor, Cc denotes a resonance condenser, D denotes a damper diode, DY denotes the horizontal deflection coil, RY denotes a double-pole, double-throw (DPDT) relay, Cs denotes a series condenser, and Vb denotes a voltage supplied to the primary side of an FBT.

As shown therein, with the provision of the DPDT relay RY, a coil terminal 1 is connected to a contact "a", and a coil terminal 2" is connected to a contact "c". Contacts "b", "d" are connected, respectively. Therefore, when the contacts "a" and "c" are respectively connected in the relay RY, a parallel inductance of L1 and L2 is obtained, thereby being adaptable to a personal computer, whereas when the contacts "b" and "d" are connected, a serial inductance of L1 and L2 is obtained, thereby being applicable to a TV receiver.

Any kind of signal determinative of whether the input display signal is a TV input signal or a computer display input signal may be employed as the switching signal IS in the relay RY.

The relation of the supply voltage Vb applied to the FBT in the deflection circuit, a current Idyh that flows through the horizontal deflection coil, an inductance Lh of the horizontal deflection, a horizontal feedback time tr, and a horizontal scanning cycle th are as follows:

$$Vb = (Idyh \times Lh) / tr \, (th / tr - 1),$$

wherein, respective dimensions are ignored.

Here, with regard to the horizontal feedback time tr, and the horizontal scanning cycle th, these will vary depending upon the TV and VGA display modes:

in the case of a TV display,

$$Vb1 = (Idyh1 \times Lh) / tr1 \, (th1 / tr1 - 1)$$

$$(here, \, tr = 11.0 \, \mu s, \, th = 63.5 \, \mu s)$$

and in the case of a VGA display,

$$Vb2 = (Idyh2 \times Lh2) / tr2 \, (th2 / tr2 - 1)$$

$$(here, \, tr = 5.5 \, \mu s, \, th = 31.7 \, \mu s)$$

Therefore, when the primary supply voltage Vb is constant (that is, Vb1 = Vb2, and, for instance, the voltage is 150V), there is obtained:

$$(Idyh1 \times Lh1) \fallingdotseq (Idyh2 \times Lh2),$$

Here, because the current in the horizontal deflection coil remains constant, there is obtained an expression of Idyh1 ≒ Idyh2. As a result, an inductance ratio between the TV and VGA modes of the deflection coil will be:

$$Lh1 \, (TV) \fallingdotseq 2 \bullet Lh2 \, (VGA)$$

Also, the deflection coil inductance in the case of a TV display mode becomes twice that of a VGA display mode thereof.

Therefore, by converting from a serial connection to a parallel connection of the deflection yoke coils, the supply voltage to the FBT remains constant for thereby enabling identical yokes to correspond to a frequency for either TV or computer.

As described above, the present invention provides the horizontal deflection coil structure for a horizontal yoke capable of corresponding to either a TV receiver or a personal computer. As a result, with a provision of a circuit almost equivalent to a conventional single frequency deflection circuit, the present invention makes it possible to realize a single display device which incorporates a TV receiver display and a personal computer display monitor.

**Claims**

1.  A horizontal deflection coil structure for a deflection yoke, comprising a plurality of horizontal deflection coils being connectable in series and parallel with each other so as to obtain plural inductances.

2.  The deflection coil structure of claim 1, wherein respective end portions of said plural horizontal deflection coils are connected to respective relay contacts in order to selectively connect said horizontal deflection coils in series and parallel with each other.

3. The deflection coil structure of claim 2, wherein said relay contacts are automatically connected and disconnected in correspondence with an input display signal of a television set or a personal computer.

4. A horizontal deflection coil structure for a deflection yoke, comprising an even numbered plurality of horizontal deflection coils assembled to said deflection yoke, coils selected from said plurality of horizontal deflection coils being divided into a set thereof and being connected to corresponding terminals of said yoke.

# FIG.1
## CONVENTIONAL ART

# FIG.2

# FIG.3A

# FIG.3B

FIG.4

EP 0 845 798 A1

<table>
<tr><td colspan="5" align="center">**European Patent Office**  **EUROPEAN SEARCH REPORT**  Application Number EP 97 40 2828</td></tr>
</table>

**DOCUMENTS CONSIDERED TO BE RELEVANT**

| Category | Citation of document with indication, where appropriate, of relevant passages | Relevant to claim | CLASSIFICATION OF THE APPLICATION (Int.Cl.6) |
|---|---|---|---|
| X | GB 2 090 507 A (MARS LTD) * page 1, line 54 – page 2, line 4; claims 1-13 * | 1,4 | H01J29/76 |
| A | EP 0 444 781 A (MATSUSHITA ELECTRIC IND CO LTD) | | |
| A | PATENT ABSTRACTS OF JAPAN vol. 009, no. 095 (E-310), 24 April 1985 & JP 59 221171 A (TOSHIBA KK), 12 December 1984, * abstract * | | |

TECHNICAL FIELDS SEARCHED (Int.Cl.6)

H01J
H04N

The present search report has been drawn up for all claims

| Place of search | Date of completion of the search | Examiner |
|---|---|---|
| THE HAGUE | 4 March 1998 | Van den Bulcke, E |